# EUROPEAN PATENT APPLICATION

(11) **EP 4 198 918 A1**
(43) Date of publication of application: **21.06.2023**
(21) Application number: 21215992.5
(22) Date of filing: 20.12.2021
(51) Int. Cl.: G06V 20/40, G06T 7/215, H04N 19/513

(54) **OBJECT DETECTION METHOD AND OBJECT DETECTION SYSTEM FOR VIDEO**

(71) Applicant: Industrial Technology Research Institute, Chutung, Hsinchu 310401 (TW)
(72) Inventor: WANG, Li-Pei, Zhudong Township, Hsinchu County 310 (TW); LI, Yu-Je, New Taipei City 242 (TW); LI, Guan-De, Tainan City 700 (TW); HUANG, Ming-Jia, Taichung City 402 (TW); LIN, Hung-Hsuan, Zhubei City, Hsinchu County 302 (TW)
(74) Representative: Krauns, Christian

(57) **Abstract**

An object detection method and an object detection system are provided. The object detection method includes the following steps. An object selected range in a current image is filtered out to obtain a background range. An object foreground range and an object background range are obtained from the object selected range. If the number of object foreground moving vectors corresponding to the object foreground range is greater than the number of background moving vectors in the object background range, a foreground moving trend of the object foreground moving vectors corresponding to the object foreground range is calculated. The object selection range of the current image is updated according to the foreground moving trend of the object foreground moving vectors corresponding to the object foreground range or a background moving trend of the background moving vectors corresponding to the background range.

## Description

### TECHNICAL FIELD

The disclosure relates in general to an object detection method and an object detection system for video.

### BACKGROUND

With the rapid development of artificial intelligence, the artificial intelligence could be used for face recognition, garbage classification, vehicle recognition and other actions in many fields. In some applications, it is even necessary to perform object recognition for video.

However, the object recognition for an image requires a lot of computing resources, which requires a lot of hardware costs to be deployed. Especially for videos, the object recognition requires huge computing resources. In order to keep up with the capture speed of at least 60 frames per second, a considerable hardware cost needs to be deployed. Therefore, the artificial intelligence technology is currently difficult to widely promote for the application of videos. How to reduce the huge computing requirements caused by the object recognition and the consumption of a large number of the computing costs, and how to accelerate the speed of the object detection has become an important topic at present.

### SUMMARY

The disclosure is directed to an object detection method and an object detection system for video.

According to one embodiment, an object detection method for video is provided. The object detection method includes the following steps. A current image among a plurality of consecutive images is received. An object selected range in the current image is filtered out to obtain a background range. A plurality of similarities of a plurality of selected range moving vectors corresponding to the object selected range to a plurality of background moving vectors corresponding to the background range are compared, to obtain an object foreground range and an object background range in the object selected range. A quantity of a plurality of object foreground moving vectors corresponding to the object foreground range and a quantity of a plurality of object background moving vectors corresponding to the object background range are compared. A foreground moving trend of the object foreground moving vectors corresponding to the object foreground range is calculated, if the quantity of the object foreground moving vectors corresponding to the object foreground range is larger than the quantity of the object background moving vectors corresponding to the object background range. The object selected range in the current image is updated according to the foreground moving trend of the object foreground moving vectors corresponding to the object foreground range, or a background moving trend of the background moving vectors corresponding to the background range.

According to another embodiment, an object detection system for video is provided. The object detection system includes a receiving unit, a range defining unit, a comparison unit, a trend analyzing unit and an updating unit. The receiving unit is configured to receive a current image among a plurality of consecutive images. The range defining unit is coupled to the receiving unit. The range defining unit is configured to filter out an object selected range in the current image, to obtain a background range and compare a plurality of similarities of a plurality of selected range moving vectors corresponding to the object selected range to a plurality of background moving vectors corresponding to the background range, to obtain an object foreground range and an object background range in the object selected range. The comparison unit is coupled to the range defining unit. The comparison unit is configured to compare a quantity of a plurality of object foreground moving vectors corresponding to the object foreground range and a quantity of a plurality of object background moving vectors corresponding to the object background range. The trend analyzing unit is coupled to the comparison unit and the range defining unit. If the quantity of the object foreground moving vectors corresponding to the object foreground range is larger than the quantity of the object background moving vectors corresponding to the object background range, the trend analyzing unit calculates a foreground moving trend of the object foreground moving vectors corresponding to the object foreground range. The updating unit is coupled to the trend analyzing unit and the comparison unit. The updating unit is configured to update the object selected range in the current image according to the foreground moving trend of the object foreground moving vectors corresponding to the object foreground range, or a background moving trend of the background moving vectors corresponding to the background range.

### BRIEF DESCRIPTION OF THE DRAWINGS

FIG. 1 illustrates a process of an object detection for a plurality of consecutive images according to an embodiment.
FIG. 2 shows a block diagram of an object detection system for video according to an embodiment.
FIGS. 3A to 3B show a flow chart of an object detection method for video according to an embodiment.
FIGS. 4 to 12 illustrate the steps in FIG. 3.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

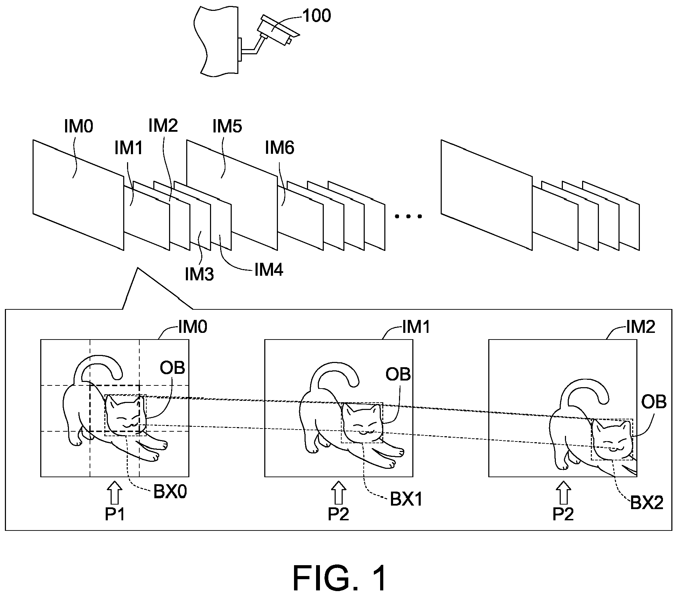

Please refer to FIG. 1, which illustrates a process of an object detection for a plurality of consecutive images according to an embodiment. The consecutive images are captured by an image capturing device 100 and arranged in chronological order. The number of images is not limited. 7 images IM0 to IM6 are shown in FIG. 1. The consecutive images described below are taken the images IM0 to IM6 as an example. The image IM0 is captured earlier than the image IM1, the image IM1 is captured earlier than the image IM2, and so on. The image capturing device 100 could be a device with image capturing function such as a camera, a mobile phone or a tablet. The images IM0 to IM6 could be obtained from the image capturing device 100 in real time; the images IM0 to IM6 could also be obtained from a storage device or cloud storage center at offline. The image capturing device 100 usually captures the images IM0 to IM6 at a rate of 60 or 120 frames per second. When the image capturing device 100 is capturing the images IM0 to IM6, the image capturing device 100 could be mobile or static.

After the image capturing device 100 captures the images IM0 to IM6, an object detection for at least one object could be performed on the images IM0 to IM6 to obtain the positions of the at least one object located in the images IM0 to IM6 respectively. When the images IM0 to IM6 are being captured, the object may be in a moving or stationary state, so the position of the object in each of the images IM0 to IM6 could be the same or different. During the object detection, whether the object detection is performed at real-time or offline, if each of the images IM0 to IM6 is detected according to an Artificial Intelligence (AI) object recognition algorithm, it will require huge computing resources.

As shown in FIG. 1, in the consecutive images IM0 to IM6 of this embodiment, only some of the images need to be detected by an object recognition procedure P1, and the rest of the images could be detected by an object estimating procedure P2. The object recognition procedure P1 is used to detect the object selected range of the object via the AI object recognition algorithm. For example, the images IM0 to IM2 contain a graphic cat, the object OB is defined as the head of the graphic cat. In the object detection method, the object recognition procedure P1 is only performed on the image IM0 to obtain an object selected range BX0. The object selected range BX0 surrounds the head of the cat in a box. The AI object recognition algorithm is, for example, a Convolutional Neural Network (CNN) algorithm, a k-nearest neighbor classification (KNN) algorithm or a Support Vector Machine (SVM) algorithm.

Furthermore, the object estimating procedure P2 is used to estimate and correct the object selected ranges BX1, BX2 of the object OB through the movement vector or optical flow of some pixels in the images IM1 and IM2. The optical flow represents the movement of every 1x1 pixel. The movement of multiple pixels (such as 4x4, 4x8, 8x8 pixels) is called a movement vector. The motion vectors are often used to find similar pixel areas in streaming images. Since the displacement of the object OB in the consecutive images IM1 and IM2 usually does not change much, the object estimating procedure P2 could use this feature to estimate and modify the object selected ranges BX1, BX2 of the object OB. After performing the object recognition procedure P1 on the image IM0 to obtain the object selected range BX0, the object estimating procedure P2 is performed on the image IM1 according to the object selected range BX0 of the image IM0, and the object estimating procedure P2 is performed on the image IM2 according to the object selected range BX1 of the image IM1. The object selected ranges BX0, BX1, BX2 of the object OB in the images IM0 to IM2 could be respectively obtained, and the position of the object OB in the images IM1 to IM2 could be known according to the object selected ranges BX0, BX1, BX2. Base on above, for the images IM3 to IM6, the object recognition procedure P1 could be performed on some of the images IM3 to IM6, and the object estimating procedure P2 could be performed on the others of the images IM3 to IM6. For example, the estimating procedure P2 may be performed on the images IM3 and IM4, the object recognition procedure P1 may be performed on the image IM5, and then the object estimating procedure P2 may be performed on the image IM6.

In comparison, the object recognition procedure P1 requires more computing resources, and the object estimating procedure P2 requires less computing resources. In the consecutive images IM0 to IM6, the object recognition procedure P1 and the object estimating procedure P2 are performed in a staggered manner. In this way, the object detection could be achieved without consuming huge computing resources. The object recognition procedure P1 could be performed every fixed time interval, or it could be performed every fixed number of images. Or, after the object estimating procedure P2 is performed, if it is found that the displacement of the object selected range BX1 or BX2 is too large, the size of the object selected range BX1 or BX2 changes too much, or the state of the object OB suddenly changes (for example, from static to moving), performing the object estimating procedure P2 could be replaced by performing the object recognition procedure P1. In the object detection method of this embodiment, the object recognition procedure P1 and the object estimating procedure P2 are performed in a staggered manner. Although only some of the images need to be performed the object recognition procedure P1 (for example, in FIG. 1, only object recognition procedure P1 is performed on the image IM0), but it could still maintain a certain level of accuracy.

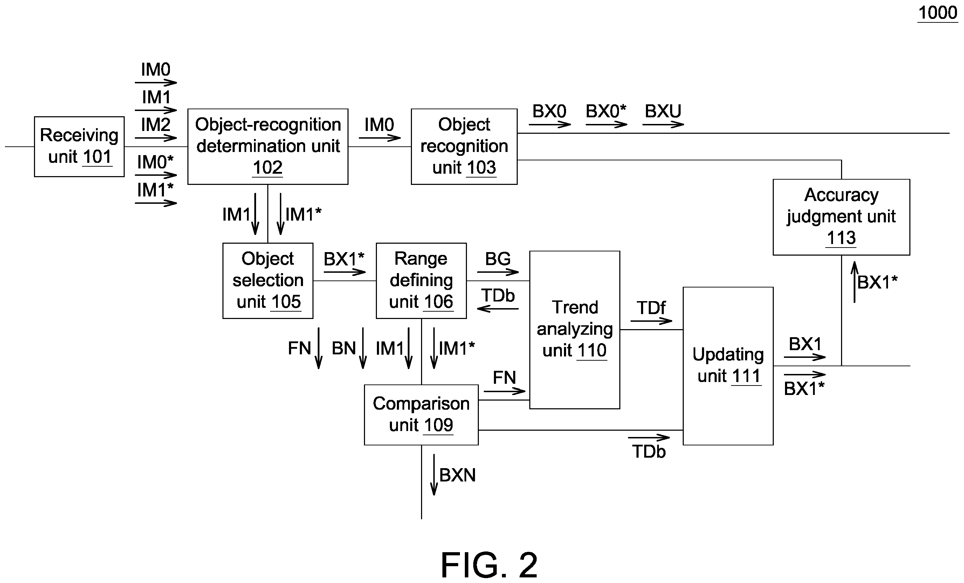

Please refer to FIG. 2, which shows a block diagram of an object detection system 1000 for video according to an embodiment. The object detection system 1000 includes a receiving unit 101, an object-recognition determination unit 102, an object recognition unit 103, an object selection unit 105, a range defining unit 106, a comparison unit 109, a trend analyzing unit 110, an updating unit 111 and an accuracy judgment unit 113. The object-recognition determination unit 102 is coupled to the receiving unit 101, the object recognition unit 103 and the object selection unit 105. The range defining unit 106 is coupled to the comparison unit 109 and the object selection unit 105. The trend analyzing unit 110 is coupled to the range defining unit 106, the comparison unit 109 and the updating unit 111. The accuracy judgment unit 113 is coupled to the object recognition unit 103 and the updating unit 111. The receiving unit 101, for example, receives the images IM0 to IM6 from the image capturing device 100, or receives the images IM0 to IM6 from a storage device. The object-recognition determination unit 102 is used to determine whether each of the images IM0 to IM6 is needed to be performed the object recognition procedure P1 or the object estimating procedure P2. A current image is defined as one of the images IM0 to IM6 which is being performed the object detection at the current time point. A previous image is defined as the image previous to the current image. At the previous time point, the previous image could be detected through the object recognition procedure P1 to obtain the object selected range of the object, or it could also be detected through the object estimating procedure P2 to obtain the object selected range of the object. Similarly, at the current time point, the current image could be detected through the object recognition procedure P1 to obtain the object selected range of the object, or it could also be detected through the object estimating procedure P2 to obtain the object selected range of the object.

As shown in FIGS. 1 and 2, in the consecutive images IM0 to IM6, at the current time point, the image IM1 is defined as the current image, and image IM0 is defined as the previous image. At the current time point, the object-recognition determination unit 102 performs the determination of the object recognition procedure P1 or the object estimating procedure P2 on the image IM1. On the other hand, at the previous time point, the image IM0 is defined as the current image, and the image IM1 is defined as a next image. At the previous time point, the object-recognition determination unit 102 performs the determination pf the object recognition procedure P1 or the object estimating procedure P2 on the image IM0. At the next time point, the image IM1 is defined as the previous image, and the image IM2 is defined as the current image. The current image, the previous image and the next image for the images IM2 to IM6 could be defined in a similar way as above, similarities will not be repeated.

As shown in FIGS. 1 and 2, the object recognition unit 103 is coupled to the object-recognition determination unit 102. The object-recognition determination unit 102 determines whether each of the images IM0 to IM6 is needed to be performed the object recognition procedure P1 or the object estimating procedure P2 at different time points. Some of the images IM0 to IM6 which are needed to be performed the object recognition procedure P1 are transmitted to the object recognition unit 103 for performing the object recognition procedure P1, and then the object selected ranges of the object OB are obtained. For example, if the object-recognition determination unit 102 deems that the image IM0 is needed to be performed the object recognition procedure P1, i.e. the image IM0 is not needed to be performed the object estimating procedure P2, the object-recognition determination unit 102 transmits the image IM0 to the object recognition unit 103, and then the object recognition unit 103 performs the object recognition procedure P1 on the image IM0 to obtain the object selected range BX0 of the object OB in the image IM0. On the other hand, if the object-recognition determination unit 102 deems that the image IM1 is not needed to be performed the object recognition procedure P1, i.e. the image IM1 is needed to be performed the object estimating procedure P2, the object-recognition determination unit 102 transmits the image IM1 to the object selection unit 105, and then the object selection unit 105 performs the object estimating procedure P2 on the image IM1 to obtain the object selected range BX1 of the object OB in the image IM1.

The object selection unit 105, the range defining unit 106, the comparison unit 109, the trend analyzing unit 110, the updating unit 111 and the accuracy judgment unit 113 are used for performing the object estimating procedure P2. These components could be independent individual devices, or they could be integrated into the same device. These components are, for example, a circuit, a chip, a circuit board, program code, or a storage device storing the program code. The following is a flowchart to describe the operation of each component in detail.

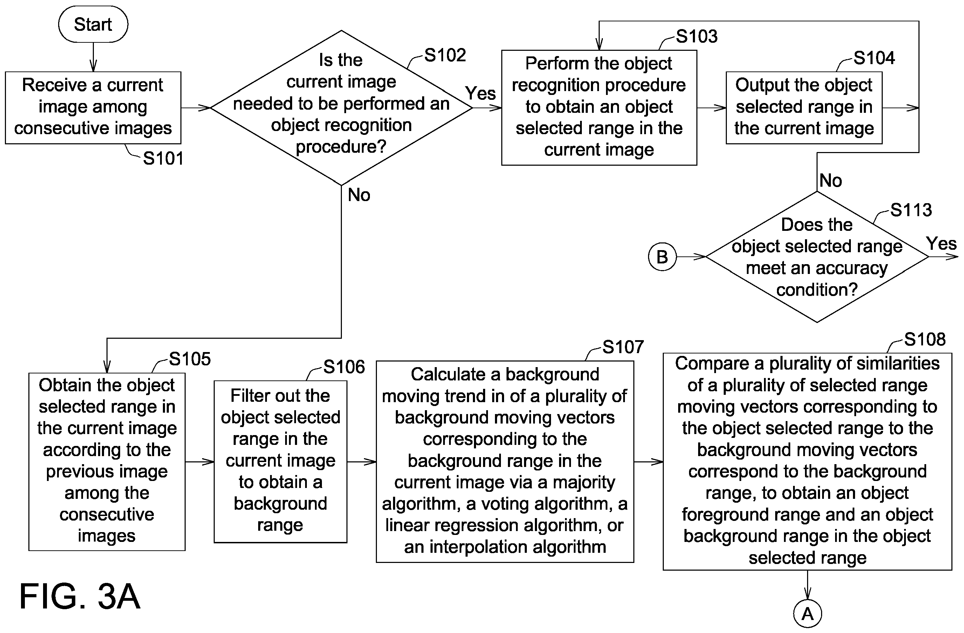

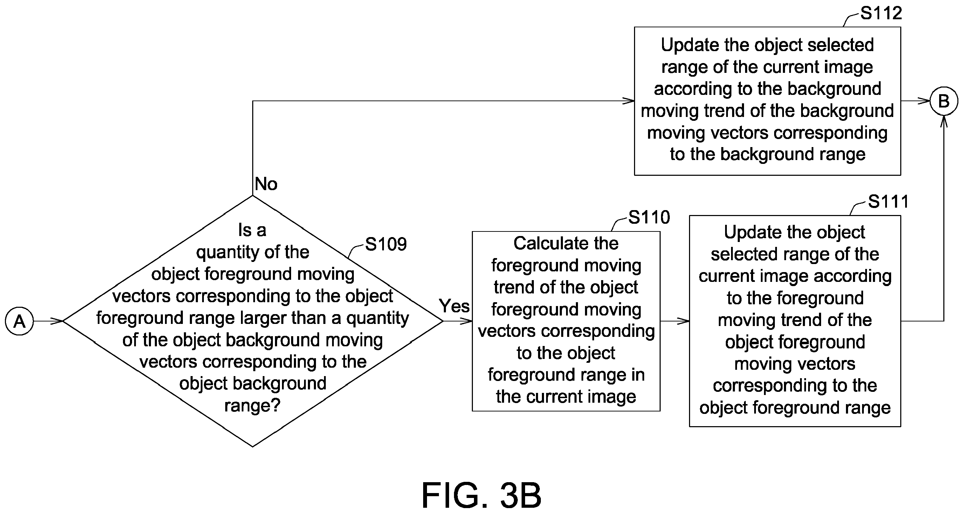

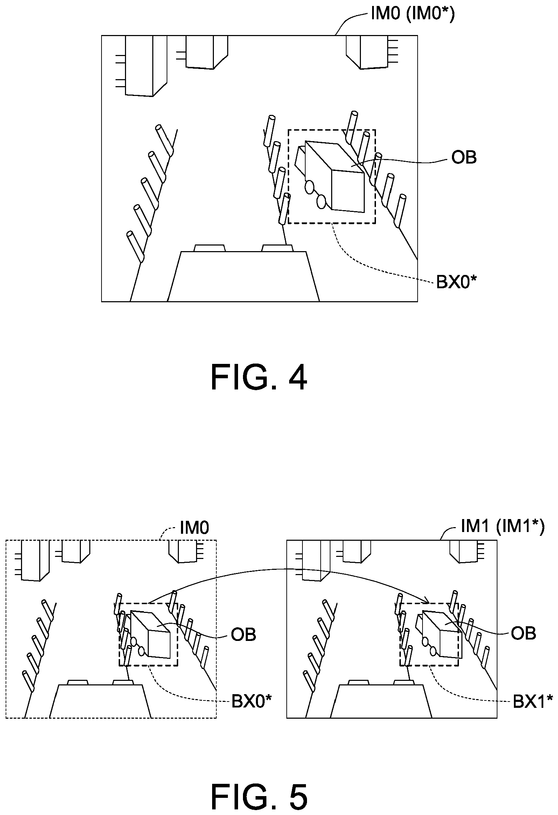

Please refer to FIGS. 2 to 12. FIGS. 3A to 3B show a flow chart of the object detection method for video according to an embodiment. FIGS. 4 to 12 illustrate the steps in FIG. 3. The video is, for example, a driving video of a driving recorder. In the present embodiment, a first time point is defined as the current time, and the image IM0 among the images IM0 to IM6 is defined as the current image IM0*. As shown in FIGS. 3A and 4, in step S101, at the first time point, the receiving unit 101 receives the image IM0 in the images IM0 to IM6. Hereinafter, the image IM0 is referred to as the current image IM0*. In this step, the receiving unit 101 may receive the current image IM0* from the image capturing device 100, or from a storage device or a cloud storage center.

Next, in step S102, the object-recognition determination unit 102 determines whether the current image IM0* is needed to be performed the object recognition procedure P1. If the object-recognition determination unit 102 deems that the current image IM0* is needed to be performed the object recognition procedure P1, i.e. "Yes", the object-recognition determination unit 102 transmits the current image IM0* to the object recognition unit 103, and the process proceeds to step S103.

In one embodiment, the object-recognition determination unit 102 may determine whether the current image IM0* is needed to be performed the object recognition procedure P1 according to a predetermined acceptable elapsed time. The value of the predetermined acceptable elapsed time is not limited thereto, and it could be adjusted according to the user's settings. After the object estimating procedure P2 has been executed for the predetermined acceptable elapsed time, it is deemed that the current image IM0* is needed to be performed the object recognition procedure P1.

Or, in another embodiment, the object-recognition determination unit 102 may determine whether the current image IM0* is needed to be performed the object recognition procedure P1 according to an acceptable number of executed images. The value of the acceptable number of executed images is not limited thereto, and it could be adjusted according to the user's settings. After the object estimating procedure P2 has executed the acceptable number of executed images, it is deemed that the current image IM0* is needed to be performed the object recognition procedure P1.

In step S103, as shown in FIG. 4, the object recognition unit 103 receives the current image IM0* from the object-recognition determination unit 102, and performs the object recognition procedure P1 to obtain an object selected range BX0* in the current image IM0*. The object recognition unit 103 detects the object selected range BX0* of the object OB in the current image IM0* via an AI object recognition algorithm. Through the AI object recognition algorithm, the object recognition unit 103 may accurately detect the object OB in the current image IM0*, and mark the object selected range BX0*, such that the location of the object OB in the current image IM0* (the image IM0) could be known. Afterwards, the object recognition unit 103 performs the step S104 to output the object selected range BX0* in the current image IM0* (the image IM0). In this embodiment, the object selected range BX0* is, for example, a square object box.

In one embodiment, the object recognition unit 103 may detect whole of the current image IM0*. Or, in another embodiment, the object recognition unit 103 may select a partial image area from the current image IM0*, and performs the object recognition procedure P1 on the partial image area.

The steps S103 to S104 are executed for performing the object recognition procedure P1; the steps S105 to S113 are executed for performing the object estimating procedure P2.

In one embodiment, a second time point is defined as the current time, the first time point is defined as the previous time point. The second time point is later than the first time point. The image IM1 in the images IM0 to IM6 is defined as the current image IM1*, and the image IM0 is defined as the previous image. In the step S101 to the step S102, the receiving unit 101 receives the image IM1 in the images IM0 to IM6. Hereinafter, the image IM1 is referred to as the current image IM1*. The object-recognition determination unit 102 determines whether the current image IM1* is needed to be performed the object recognition procedure P1. If the object-recognition determination unit 102 deems that the current image IM1* is not needed to be performed the object recognition procedure P1, i.e. "No", the object-recognition determination unit 102 transmits the current image IM1* to the object selection unit 105, and the process proceeds to the step S105.

In step S105, as shown in FIG. 5, the object selection unit 105 receives the current image IM1* from the object-recognition determination unit 102, and performs the object estimating procedure P2. The object-recognition determination unit 102 obtains the object selected range BX1* in the current image IM1* according to the previous image (the image IM0). The left side of FIG. 5 is the previous image (the image IM0), and the right side of FIG. 5 is the current image IM1* (the image IM1). The image IM0 has marked the object selected range BX0* of the object OB at the previous time point (the first time point). In this step, the object selected range BX1* of the object OB of the current image IM1* is directly estimated according to the object selected range BX0* of the previous image (the image IM0), and steps S106 to S113 are performed to adjust the object selected range BX1*. In another embodiment, the object selected range BX0* in the previous image (the image IM0) in FIG. 5 may be obtained by performing the object estimating procedure P2.

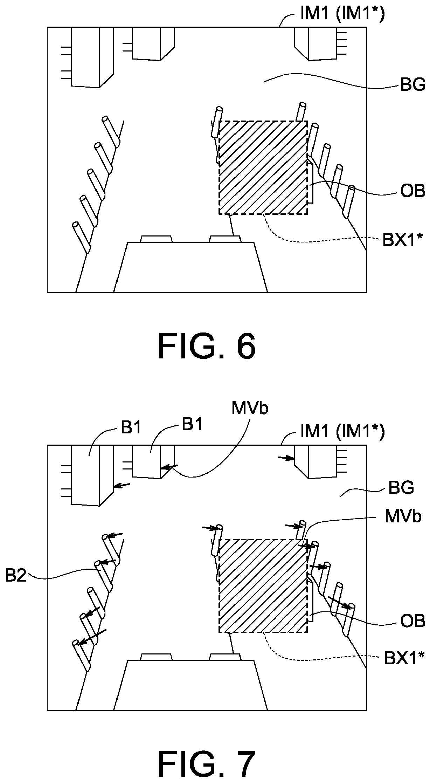

Then, in step S106, as shown in FIG. 6, the range defining unit 106 filters out the object selected range BX1* in the current image IM1* to obtain a background range BG. In this step, the range defining unit 106, for example, excludes the range covered by the object selected range BX1* (i.e., the blacked-out part of the object selected range BX1* in FIG. 6), and only retains the range outside the object selected range BX1* Generally, in the consecutive images IM0 to IM6, the background range BG of each of the images IM0 to IM6 is usually unchanged (or the amount of movement change is small). Even if the background range BG has a movement change, it is usually based on the passive displacement caused by the movement of the image capturing device 100, not the active displacement. The object OB is more likely to have active displacement. After removing the object selected range BX1* in the step S106, the passive displacement analysis of the background range BG could be performed.

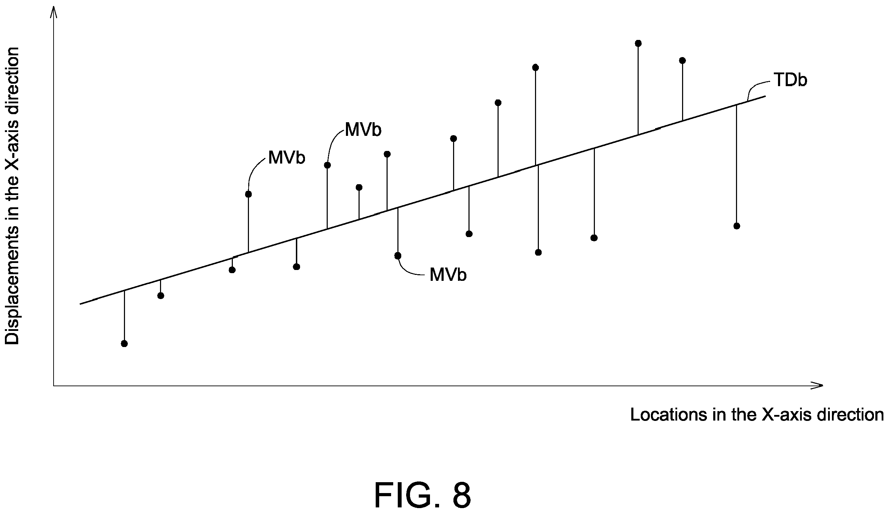

Next, in step S107, as shown in FIGS. 7 and 8, the trend analyzing unit 110 calculates a background moving trend TDb of a plurality of background moving vectors MVb corresponding to the background range BG in the current image IM1* via a majority algorithm, a voting algorithm, a linear regression algorithm, or an interpolation algorithm. The background moving vectors MVb of the current image IM1* are the movement vectors of the pixels corresponding to the background range BG between the current image IM1* and the previous image, that is, the displacements of the optical flows in the background range BG. The background moving trend TDb is the trend of the optical flow displacements corresponding to the background range BG. In the example of FIG. 7, the background range BG of the current image IM1* contains images of fixed objects such as singboard B1, anti-collision bar B2, etc. Since the passive displacement of the background range BG in the current image IM1* is mainly caused by the image capturing device 100 moving forward, the background moving vectors MVb in the current image IM1* have a certain changing tendency. As shown in FIG. 8, the displacements of the background moving vectors MVb corresponding to the background range BG in the current image IM1* are shown in the X-axis direction (for example, the horizontal direction of the current image IM1*). Referring to the FIG. 8, the changing tendency of the displacements could be obtained. The trend analyzing unit 110 could generate a displacement trend line corresponding to the optical flow displacements in the X-axis direction according to the background moving vectors MVb. The displacement trend line is the background moving trend TDb. The background moving trend TDb contains a plurality of two-dimensional coordinate values. The first dimension value represents the position point in the X-axis direction in the current image IM1*, and the second dimension value represents the subsequent adjustment when adjusting the object selected range BX1* of the object OB. On the other hand, the background moving vectors MVb also have a certain changing tendency in the Y-axis direction (for example, the vertical direction of the current image IM1*). The trend analyzing unit 110 could generate another background moving trend corresponding to the optical flow displacements in the Y-axis direction according to the background moving vectors MVb, which is not shown here.

The trend analyzing unit 110 could compare the background moving vectors MVb with a default outlier to exclude some of the background moving vectors MVb that are greater than or equal to the default outlier. When one of the background moving vectors MVb is greater than or equal to the default outlier, it means that this background moving vector MVb has a large displacement compared with the others of the background moving vectors MVb. The value of the default outlier could be adjusted according to user settings. The trend analyzing unit 110 calculates the background moving trend TDb of the background moving vectors MVb corresponding to the background range BG according to the background moving vectors MVb which are less than the default outlier, so as to increase the accuracy when calculating the foreground moving trend TDb.

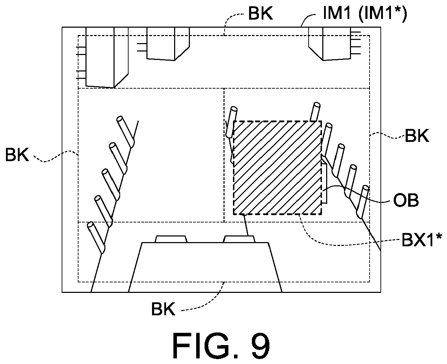

In an embodiment, as shown in FIG. 9, the background range BG may include the sky, buildings, roads and other scenes. The trend analyzing unit 110 could crop the background range BG into several background range blocks BK according to different scenes, and then obtain the corresponding background moving vectors MVb for each of the background range blocks BK. The trend analyzing unit 110 then generates a corresponding background moving trend according to the respective background moving vector MVb. FIG. 9 shows an example of 4 background range blocks BK.

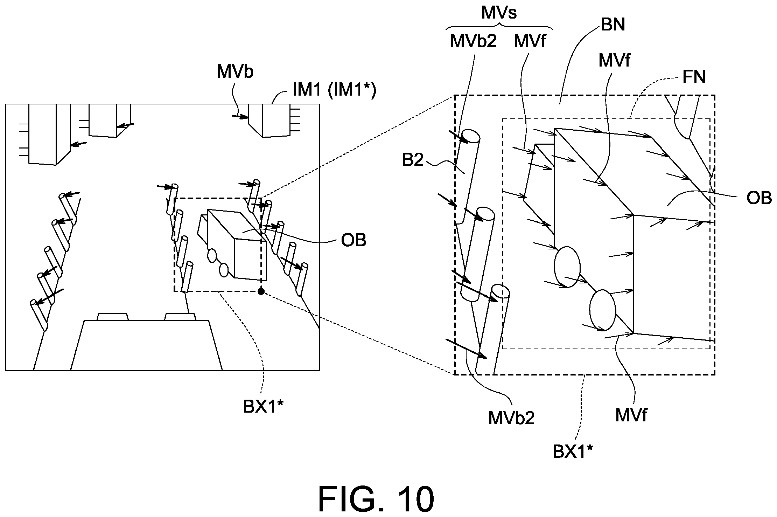

Next, in step S108, as shown in FIG. 10, the range defining unit 106 compares a plurality of similarities of a plurality of selected range moving vectors MVs corresponding to the object selected range BX1* to the background moving vectors MVb correspond to the background range BG, to obtain an object foreground range FN and an object background range BN in the object selected range BX1* Each of the selected range moving vectors MVs represents the movement vector corresponding to each pixel in the object selected range BX1* between the current image IM1* and the previous image, that is, the displacement of each optical flow in the object selected range BX1* In detail, when comparing the similarities of the selected range moving vectors MVs corresponding to the object selected range BX1* to the background moving vectors MVb corresponding to the background range BG, if at least one of the selected range moving vectors MVs is not similar to the background moving trend TDb of the background moving vector MVb, the range defining unit 106 defines this at least one selected range moving vector MVs as being an object foreground moving vector MVf. The range of the at least one object foreground moving vector MVf in the object selected range BX1* is defined as the object foreground range FN. On the other hand, the remaining range not covered by the range of the object foreground moving vectors MVf in the object selected range BX1* could be defined as the object background range BN. The object background range BN includes a plurality of object background moving vectors MVb2. The object background moving vectors MVb2 are some of the selected range moving vectors MVs whose comparison result is "similar".

In the example of FIG. 10, the object selected range BX1* of the current image IM1* contains the anti-collision bar B2 and the object OB. The anti-collision bar B2 has the passive displacement, and the object OB has the active displacement. Since the anti-collision bar B2 and the background range BG in the object selected range BX1* have the passive displacement, the range defining unit 106 could compare the selected range moving vectors MVs corresponding to the object selected range BX1* and the background moving trend TDb of the background moving vectors MVb, to find the object foreground moving vectors MVf that are not similar to the background moving vectors MVb. Some of the selected range moving vectors MVs that are similar to the background moving vectors MVb could be defined as the object background moving vectors MVb2. In this way, in the object selected range BX1* some of the selected range moving vectors MVs, which are not similar to the background moving vectors MVb (i.e. the object foreground moving vectors MVf) could be used to define the object foreground range FN. As shown on the right side of FIG. 10, the object foreground range FN is located in the object selected range BX1*. The object selected range BX1* includes the object foreground range FN. The range covered by the object selected range BX1* is larger than that covered by the object foreground range FN.

In one embodiment, the range defining unit 106 could also compare the background moving vectors MVb corresponding to the background range BG and the background moving trend TDb generated from the background moving vectors MVb. If at least one of the background moving vectors MVb is not similar to the background moving trend TDb, the range defining unit 106 selects this at least one background moving vector MVb to obtain a new object selected range BXN. The new object selected range BXN indicates a new object in the current image IM1*. This object has not yet appeared in the previous image, or has not completely appeared in the previous image, so this object could not be detected through the object recognition procedure P1 or the object estimating procedure P2, this object is not shown here.

Afterwards, as shown in FIG. 3B, in step S109, the comparison unit 109 compares a quantity of the object foreground moving vectors MVf corresponding to the object foreground range FN and a quantity of the object background moving vectors MVb2 corresponding to the object background range BN in the current image IM1* If the quantity of the object foreground moving vectors MVf corresponding to the object foreground range FN is larger than the object background moving vectors MVb2 corresponding to the object background range BN, the process proceeds to step S110; if the quantity of the object foreground moving vectors MVf corresponding to the object foreground range FN is larger than the object background moving vectors MVb2 corresponding to the object background range BN, the process proceeds to step S112. Each of the object foreground moving vectors MVf represents the movement vector corresponding to each pixel in the object foreground range FN between the current image IM1* and the previous image, which is the displacement of each optical flow in the object foreground range FN. For example, as shown on the right side of FIG. 10, the object selected range BX1* includes the object foreground range FN and the object background range BN. The selected range moving vectors MVs includes the object foreground moving vectors MVf and the object background moving vectors MVb2. The object foreground moving vectors MVf are located in the object foreground range FN, and the object background moving vectors MVb2 are located in the object background range BN, and are outside the object foreground range FN.

In step S110, the trend analyzing unit 110 calculates the foreground moving trend TDf of the object foreground moving vectors MVf corresponding to the object foreground range FN in the current image IM1*. The foreground moving trend TDf is the displacement trend of the optical flow displacement corresponding to the object foreground range FN. In this step, the trend analyzing unit 110 finds that the object foreground moving vectors MVf are the majority in the object selected range BX1, so it could be confirmed that the object OB has active displacement. Therefore, the passive displacement in the object selected range BX1 (that is, the background moving vectors MVb corresponding to the background range BG in the object selected range BX1) could be regarded as noise and filtered out. When the trend analyzing unit 110 calculates the foreground moving trend TDf, it only needs to consider the object foreground moving vectors MVf corresponding to the object foreground range FN.

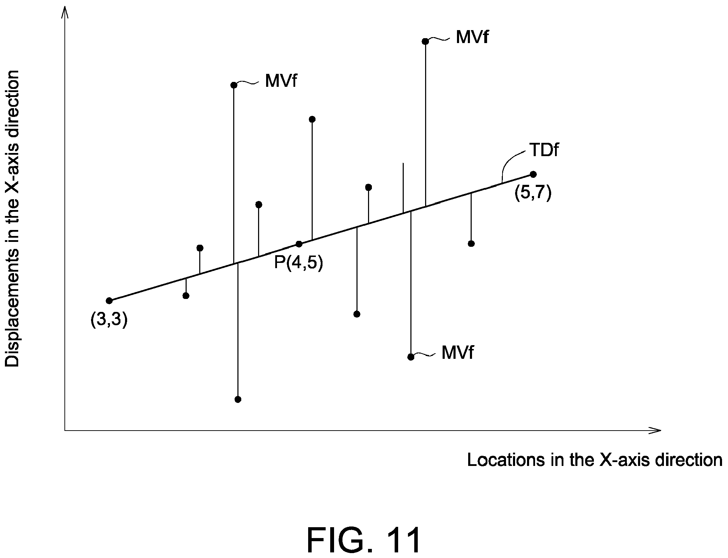

Please refer to FIG. 11, which shows the displacements of the object foreground moving vectors MVf of the current image IM1 * in the X-axis direction. From the FIG. 11, the changing tendency of the displacements could be known. The trend analyzing unit 110 could generate a displacement trend line corresponding to the optical flow displacements in the X-axis direction according to the object foreground moving vectors MVf. The displacement trend line is the foreground moving trend TDf. The foreground moving trend TDf contains a plurality of two-dimensional coordinate values. The first dimension value represents the position point in the X axis direction in the current image IM1* The second dimension value represents the amount of displacement that needs to be adjusted for the position point in the X-axis direction when adjusting the object selected range BX1* of the object OB. On the other hand, the object foreground moving vectors MVf also have a certain changing tendency in the Y-axis direction. The trend analyzing unit 110 could generate another foreground moving trend corresponding to the optical flow displacements in the Y-axis direction based on the background moving vectors MVb, which is not shown here. The trend analyzing unit 110 could calculate the foreground moving trend TDf according to the displacement changing tendency of the object foreground moving vectors MVf corresponding to the X-axis direction and the Y-axis direction.

In one embodiment, the trend analyzing unit 110 calculates the foreground moving trend TDf of the moving vector MVf corresponding to the object foreground range FN via a majority algorithm, a voting algorithm, a linear regression algorithm, or an interpolation algorithm.

In another embodiment, the trend analyzing unit 110 may compare the object foreground moving vectors MVf with a default outlier to exclude some of the foreground moving vectors MVf which are greater than or equal to the default outlier. When one of the object foreground moving vectors MVf is greater than or equal to the default outlier, it means that this object foreground moving vector MVf has a large displacement compared with the others of the object foreground moving vectors MVf. The default outlier could be adjusted according to user settings. The trend analyzing unit 110 calculates the foreground moving trend TDf of the object foreground moving vectors MVf corresponding to the object foreground range FN according to the object foreground moving vectors MVf which are less than the default outlier, in order to increase the accuracy of calculating the foreground moving trend.

In an embodiment, the trend analyzing unit 110 may select some of the object foreground moving vectors MVf, to calculate the foreground moving trend TDf according to a predetermined distance range condition or an object characteristic condition. The predetermined distance range condition and the object characteristic condition could be adjusted according to user settings. For example, the object foreground range of an image may contain a human skeleton. Since most of the nodes of the human skeleton are at the joints of the skeleton (e.g., wrist, elbow), and the number of them is small, the connection range between the wrist and the elbow could be used to select some of the object foreground moving vectors MVf to calculate the foreground moving trend TDf. The number of nodes could be defined as the object characteristic condition, and the connection range between the wrist and the elbow could be defined as the predetermined distance range condition.

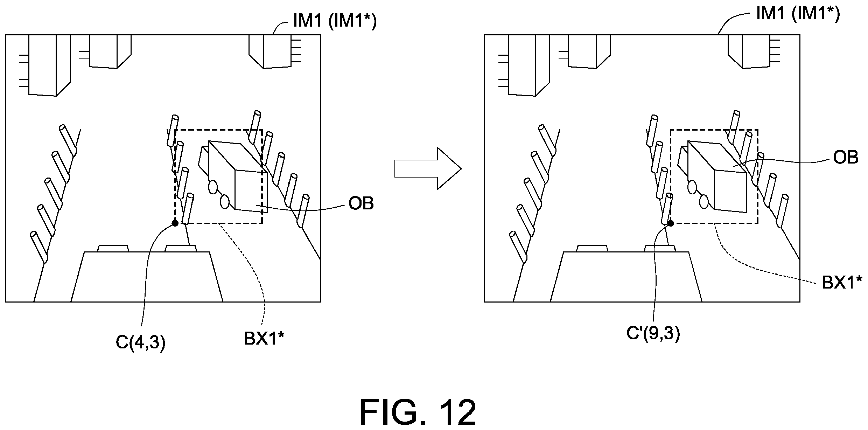

After performing the step S110, the process proceeds to step S111. The updating unit 111 updates the object selected range BX1* of the current image IM1* according to the foreground moving trend TDf of the object foreground moving vectors MVf corresponding to the object foreground range FN. In detail, the updating unit 111 compares the positions of the object foreground moving vectors MVf in the current image IM1* with the two-dimensional coordinate of the foreground moving trend TDf to obtain the amount of displacement that needs to be adjusted corresponding to the positions. The updating unit 111 then moves the positions correspondingly according to the displacement, so that the updating unit 111 could obtain the final position of the object selected range BX1* of the object OB. As shown in FIG. 12, the updated object selected range BX1* moves to the right according to the foreground moving trend TDf. The updating unit 111 maps the coordinate point C(4,3) in the object foreground range FN to the foreground moving trend TDf in FIG. 11. Since the position point in the X-axis direction is 4, the updating unit 111 finds, according to the coordinate point P(4,5) on the foreground moving trend TDf, that the displacement of position point 4 needs to be adjusted is 5. Therefore, the updating unit 111 moves the coordinate point C(4,3) to the coordinate point C'(9,3), and the other position points in the object foreground range FN (including the X-axis direction and the Y-axis direction) follow the above analogy. The updating unit 111 updates the object selected range BX1* of the current image IM1* by this way. The updating unit 111 could accurately label the actively shifted object OB in the current image IM1* to show the location of the object OB in the current image IM1*.

In the step S109, If the object foreground moving vectors MVf are not the majority in the object selected range BX1, it means that the object OB in the object selected range BX1 is also a fixed object (for example, the vehicle is in a stopped state), so the process goes to step S112. In step S112, the updating unit 111 updates the object selected range BX1 of the current image IM1 according to the background moving trend TDb of the background moving vectors MVb corresponding to the background range BG. This step is similar to the above step S111. The object foreground moving vectors MVf in step S111 is replaced with the background moving vectors MVb, and the description will not be repeated here.

After performing the step S111 or S112, the process proceeds to step S113. In step S113, the accuracy judgment unit 113 determines whether the object selected range BX1* meets an accuracy condition. The accuracy condition is, for example, that the position change of the object selected range BX1* must be less than a predetermined level, the area change of the object selected range BX1* must be less than a predetermined level, and the change ratio of the object foreground moving vectors MVf must be less than a predetermined degree. The predetermined degree could be adjusted according to user settings. When the result of the object estimating procedure P2 could not meet the accuracy condition, (that is, the amount of change mentioned above exceeds the predetermined degree), the object selected range BX1* obtained by the object estimating procedure P2 is not outputted, but the object recognition procedure P1 is executed instead to obtain and output the object selected range BX1*. On the other hand, the object recognition unit 103 could also select a partial image area based on the part that does not meet the accuracy condition in the current image IM1* and execute the object recognition procedure P1 based on this partial image area.

When the object selected range BX1 does not meet the accuracy condition, the process returns to the step S103. The object recognition unit 103 executes the object recognition procedure P1 on the current image IM1* to generate another new object selected range BXU, and updates and replaces the original object selected range BX1* by executing the object estimating procedure P2 according to the another new object selected range BXU; When the object selected range BX1* meets the accuracy condition, the object selected range BX1* is outputted.

After tracking the object of image IM1, the receiving unit 101 receives the image IM2 in the consecutive images IM0 to IM6 at a third time point. At this time point, the image IM2 is defined as the current image, and the image IM1 is defined as the previous image. Then, the object detection system executes the steps S101 to S113 on the image IM2. The images IM3 to IM6 could be detected by the analogy way. In each of the images IM3 to IM6, the object selected range of the object OB could be accurately detected to complete the object detection of the consecutive images.

In one embodiment, the object detection method could be applied to any irregular-shaped object. The object selected range could be, for example, the cutting edge of object OB. In this application, the object selected range is irregularly shaped. That is, the shape of the object selected range is not limited and could be adjusted according to the user's setting.

According to the various embodiments described above, the object recognition procedure and the object estimating procedure are performed in a staggered manner, so that the object detection on the consecutive images could be maintained at a certain level of accuracy without consuming a lot of computing resources. In this way, the AI technology could be widely promoted on consecutive images without huge hardware cost.

It will be apparent to those skilled in the art that various modifications and variations could be made to the disclosed embodiments. It is intended that the specification and examples be considered as exemplary only, with a true scope of the disclosure being indicated by the following claims and their equivalents.

## Claims

1. An object detection method for video, wherein the object detection method comprises:
receiving a current image (IM1*) among a plurality of consecutive images (IM0 to IM6);
filtering out an object selected range (BX1*) in the current image (IM1*), to obtain a background range (BG);
comparing a plurality of similarities of a plurality of selected range moving vectors (MVs) corresponding to the object selected range (BX1*) to a plurality of background moving vectors (MVb) corresponding to the background range (BG), to obtain an object foreground range (FN) and an object background range (BN) in the object selected range (BX1*);
comparing a quantity of a plurality of object foreground moving vectors (MVf) corresponding to the object foreground range (FN) and a quantity of a plurality of object background moving vectors (MVb2) corresponding to the object background range (BN);
calculating a foreground moving trend (TDf) of the object foreground moving vectors (MVf) corresponding to the object foreground range (FN), if the quantity of the object foreground moving vectors (MVf) corresponding to the object foreground range (FN) is larger than the quantity of the object background moving vectors (MVb2) corresponding to the object background range (BN); and
updating the object selected range (BX1*) in the current image (IM1*) according to the foreground moving trend (TDf) of the object foreground moving vectors (MVf) corresponding to the object foreground range (FN), or a background moving trend (TDb) of the background moving vectors (MVb) corresponding to the background range (BG).

2. The object detection method for video according to claim 1, further comprising:
determining whether the current image is needed to be performed an object recognition procedure; and
obtaining the object selected range in the current image according to a previous image of the consecutive images, when the current image is not needed to be performed the object recognition procedure.

3. The object detection method for video according to claim 2, wherein whether the current image is needed to be performed the object recognition procedure is determined according to a predetermined acceptable elapsed time.

4. The object detection method for video according to claim 2, wherein whether the current image is needed to be performed the object recognition procedure is determined according to an acceptable number of executed images.

5. The object detection method for video according to anyone of the claims 1 to 4, further comprising:
calculating the background moving trend of the background moving vectors corresponding to the background range via a majority decision algorithm, a voting algorithm, a linear regression algorithm, or an interpolation algorithm.

6. The object detection method for video according to anyone of the claims 1 to 5, wherein in the step of comparing the similarities of the selected range moving vectors corresponding to the object selected range to the background moving vectors corresponding to the background range, if at least one of the selected range moving vectors is not similar to the background moving trend of the background moving vectors corresponding to the background range, the object foreground range is obtained according to the at least one of the selected range moving vectors from the object selected range.

7. The object detection method for video according to anyone of the claims 1 to 6,
wherein the object selected range in the current image is updated according to the foreground moving trend, if the quantity of the object foreground moving vectors corresponding to the object foreground range is larger than the quantity of the object background moving vectors corresponding to the object background range;
the object selected range in the current image is updated according to the background moving trend, if the quantity of the object foreground moving vectors corresponding to the object foreground range is less than the quantity of the object background moving vectors corresponding to the object background range.

8. The object detection method for video according to anyone of the claims 1 to 7, wherein in the step of calculating the foreground moving trend of the object foreground moving vectors corresponding to the object foreground range, some of the object foreground moving vectors selected according to a predetermined distance range condition or an object characteristic condition are used for calculating the foreground moving trend.

9. The object detection method for video according to anyone of the claims 1 to 8, wherein in the step of calculating the foreground moving trend of the object foreground moving vectors corresponding to the object foreground range, a majority algorithm, a voting algorithm, a linear regression algorithm, or an inner difference algorithm is performed to obtain the foreground moving trend of the object foreground moving vectors corresponding to the object foreground range.

10. The object detection method for video according to anyone of the claims 1 to 9, wherein in the step of calculating the foreground moving trend of the object foreground moving vectors corresponding to the object foreground range, the object foreground moving vectors are compared with a default outlier, and the foreground moving trend of the object foreground moving vectors corresponding to the object foreground range is obtained according to some of the object foreground moving vectors which are less than the default outlier.

11. The object detection method for video according to anyone of the claims 1 to 10, wherein after performing the step of updating the object selected range in the current image, the object detection method further comprises:
determining whether the object selected range meets an accuracy condition; and
performing the object recognition procedure to update the object selected range in the current image, if the object selected range does not meet the accuracy condition.

12. The object detection method for video according to claim 11, wherein in the step of performing the object recognition procedure, a partial image area is selected from the current image according to the accuracy condition, and the object recognition procedure is performed on the partial image area, such that the object selected range is updated in the partial image area.

13. An object detection system (1000) for video, wherein the object detection system (1000) comprises:
a receiving unit (101), configured to receive a current image (IM1*) among a plurality of consecutive images (IM0 to IM6);
a range defining unit (106), coupled to the receiving unit (101), wherein the range defining unit (106) is configured to filter out an object selected range (BX1*) in the current image (IM1*), to obtain a background range (BG); and compare a plurality of similarities of a plurality of selected range moving vectors (MVs) corresponding to the object selected range (BX1*) to a plurality of background moving vectors (MVb) corresponding to the background range (BG), to obtain an object foreground range (FN) and an object background range (BN) in the object selected range (BX1*);
a comparison unit (109), coupled to the range defining unit (106), wherein the comparison unit (109) is configured to compare a quantity of a plurality of object foreground moving vectors (MVf) corresponding to the object foreground range (FN) and a quantity of a plurality of object background moving vectors (MVb2) corresponding to the object background range (BN);
a trend analyzing unit (110), coupled to the comparison unit (109) and the range defining unit (106), wherein if the quantity of the object foreground moving vectors (MVf) corresponding to the object foreground range (FN) is larger than the quantity of the object background moving vectors (MVb2) corresponding to the object background range (BN), the trend analyzing unit (110) calculates a foreground moving trend (TDf) of the object foreground moving vectors (MVf) corresponding to the object foreground range (FN); and
an updating unit (111), coupled to the trend analyzing unit (110) and the comparison unit (109), wherein the updating unit (111) is configured to update the object selected range (BX1*) in the current image (IM1*) according to the foreground moving trend (TDf) of the object foreground moving vectors (MVf) corresponding to the object foreground range (FN), or a background moving trend (TDb) of the background moving vectors (MVb) corresponding to the background range (BG).

14. The object detection system for video according to claim 13, further comprising:
an object recognition unit, configured to perform an object recognition procedure;
an object-recognition determination unit, coupled to the receiving unit and the object recognition unit, wherein the object-recognition determination unit is configured to determine whether the object recognition unit needs to perform the object recognition procedure on the current image; and
an object selection unit, coupled to the object-recognition determination unit and the range defining unit, wherein when the object recognition unit does not need to perform the object recognition procedure on the current image, the object selection unit obtains the object selected range in the current image according to a previous image of the consecutive images.

15. The object detection system for video according to claim 14, wherein the object-recognition determination unit determines whether the object recognition unit needs to perform the object recognition procedure on the current image according to a predetermined acceptable elapsed time.

16. The object detection system for video according to claim 14, wherein the object-recognition determination unit determines whether the object recognition unit needs to perform the object recognition procedure on the current image according to an acceptable number of executed images.

17. The object detection system for video according to anyone of the claims 13 to 16, wherein the trend analyzing unit calculates the background moving trend of the background moving vectors corresponding to the background range via a majority decision algorithm, a voting algorithm, a linear regression algorithm, or an interpolation algorithm.

18. The object detection system for video according to anyone of the claims 13 to 17, wherein if at least one of the selected range moving vectors is not similar to the background moving trend of the background moving vectors corresponding to the background range, the range defining unit obtains the object foreground range according to the at least one of the selected range moving vectors from the object selected range.

19. The object detection system for video according to anyone of the claims 13 to 18, wherein if the quantity of the object foreground moving vectors corresponding to the object foreground range is larger than the quantity of the object background moving vectors corresponding to the object background range, the updating unit updates the object selected range in the current image according to the foreground moving trend;
if the quantity of the object foreground moving vectors corresponding to the object foreground range is less than the quantity of the object background moving vectors corresponding to the object background range, the updating unit updates the object selected range in the current image according to the background moving trend.

20. The object detection system for video according to anyone of the claims 13 to 19, wherein the trend analyzing unit selects some of the object foreground moving vectors according to a predetermined distance range condition or an object characteristic condition to calculate the foreground moving trend.

21. The object detection system for video according to anyone of the claims 13 to 20, wherein the trend analyzing unit performs a majority algorithm, a voting algorithm, a linear regression algorithm, or an inner difference algorithm to obtain the foreground moving trend of the object foreground moving vectors corresponding to the object foreground range.

22. The object detection system for video according to anyone of the claims 13 to 21, wherein the trend analyzing unit compares the object foreground moving vectors with a default outlier, and obtains the foreground moving trend of the object foreground moving vectors corresponding to the object foreground range according to the object foreground moving vectors which are less than the default outlier.

23. The object detection system for video according to anyone of the claims 13 to 22, further comprising:
an accuracy judgment unit, coupled to the updating unit, wherein the accuracy judgment unit is configured to determine whether the object selected range meets an accuracy condition; and
an object recognition unit, coupled to the accuracy judgment unit, wherein the object recognition unit performs the object recognition procedure to update the object selected range in the current image, if the object selected range does not meet the accuracy condition.

24. The object detection system for video according to claim 23, wherein the object recognition unit selects a partial image area from the current image according to the accuracy condition, and performs the object recognition procedure on the partial image area, such that the object selected range is updated in the partial image area.

## Amended claims

### Amended claims in accordance with Rule 137(2) EPC.

1. An object detection method for video, wherein the object detection method comprises:
(S101) receiving a current image (IM1*) among a plurality of consecutive images (IM0 to IM6);
(S106) filtering out an object selected block (BX1*) in the current image (IM1*), to obtain a background block (BG);
(S108) comparing a plurality of similarities of a plurality of selected block moving vectors (MVs) corresponding to the object selected block(BX1*) to a plurality of background moving vectors (MVb) corresponding to the background block (BG), to obtain an object foreground block (FN) and an object background block (BN) in the object selected block (BX1*);
(S109) comparing an amount of a plurality of object foreground moving vectors (MVf) corresponding to the object foreground block (FN) an amount of a plurality of object background moving vectors (MVb2) corresponding to the object background block (BN);
(S110) calculating a foreground moving trend (TDf) of the object foreground moving vectors (MVf) corresponding to the object foreground block (FN), if the amount of the object foreground moving vectors (MVf) corresponding to the object foreground block (FN) is larger than the amount of the object background moving vectors (MVb2) corresponding to the object background block (BN); and
(S111) updating the object selected block (BX1*) in the current image (IM1*) by using the foreground moving trend (TDf) of the object foreground moving vectors (MVf) corresponding to the object foreground block (FN), or a background moving trend (TDb) of the background moving vectors (MVb) corresponding to the background block (BG).

2. The object detection method for video according to claim 1, further comprising:
(S102) determining whether the current image (IM1*) is needed to be performed an object recognition procedure; and
(S105) obtaining the object selected block (BX1*) in the current image (IM1*) by using a previous image (IM0) of the consecutive images (IM0 to IM6), when the current image (IM1*) is not needed to be performed the object recognition procedure.

3. The object detection method for video according to claim 2, wherein whether the current image (IM1*) is needed to be performed the object recognition procedure is determined according to a predetermined elapsed time.

4. The object detection method for video according to claim 2, wherein whether the current image (IM1*) is needed to be performed the object recognition procedure is determined by using a number of executed images.

5. The object detection method for video according to anyone of the claims 1 to 4, further comprising
(S107) calculating the background moving trend (TDb) of the background moving vectors (MVb) corresponding to the background block (BG) via a majority decision algorithm, a voting algorithm, a linear regression algorithm, or an interpolation algorithm.

6. The object detection method for video according to anyone of the claims 1 to 5, wherein in the step of (S108) comparing the similarities of the selected block moving vectors (MVs) corresponding to the object selected block (BX1*) to the background moving vectors (MVb) corresponding to the background block (BG), if at least one of the selected block moving vectors (MVs) is not similar to the background moving trend (TDb) of the background moving vectors (MVb2) corresponding to the background block (BG), the object foreground block (FN) is obtained by using the at least one of the selected block moving vectors (MVs) from the object selected block (BX1*).

7. The object detection method for video according to anyone of the claims 1 to 6,
wherein the object selected block (BX1*) in the current image (IM1*) is updated by using the foreground moving trend (TDf), if the amount of the object foreground moving vectors (MVf) corresponding to the object foreground block (FN) is larger than the amount of the object background moving vectors (MVb2) corresponding to the object background block (BN);
the object selected block (BX1*) in the current image (IM1*) is updated by using the background moving trend (TDb), if the amount of the object foreground moving vectors (MVf) corresponding to the object foreground block (FN) is less than the amount of the object background moving vectors (MVb2) corresponding to the object background block (BN).

8. The object detection method for video according to anyone of the claims 1 to 7, wherein in the step of (S110) calculating the foreground moving trend (TDf) of the object foreground moving vectors (MVf) corresponding to the object foreground block (FN), some of the object foreground moving vectors (MVf) selected by using a predetermined distance block condition or an object characteristic condition are used for calculating the foreground moving trend (TDf).

9. The object detection method for video according to anyone of the claims 1 to 8, wherein in the step of (S110) calculating the foreground moving trend (TDf) of the object foreground moving vectors (MVf) corresponding to the object foreground block (FN), a majority algorithm, a voting algorithm, a linear regression algorithm, or an inner difference algorithm is performed to obtain the foreground moving trend (TDf) of the object foreground moving vectors (MVf) corresponding to the object foreground block (FN).

10. The object detection method for video according to anyone of the claims 1 to 9, wherein in the step of (S110) calculating the foreground moving trend (TDf) of the object foreground moving vectors (MVf) corresponding to the object foreground block (FN), the object foreground moving vectors (MVf) are compared with a default outlier, and the foreground moving trend (TDf) of the object foreground moving vectors (MVf) corresponding to the object foreground block (FN) is obtained by using some of the object foreground moving vectors (MVf) which are less than the default outlier.

11. The object detection method for video according to anyone of the claims 1 to 10, wherein after performing the step of (S111) updating the object selected block (BX1*) in the current image, the object detection method further comprises:
(S113) determining whether the object selected block (BX1*) meets an accuracy condition; and
(S103) performing the object recognition procedure to update the object selected block (BX1*) in the current image (IM1*), if the object selected block (BX1*) does not meet the accuracy condition.

12. The object detection method for video according to claim 11, wherein in the step of (S103) performing the object recognition procedure, a partial image area is selected from the current image (IM1*) by using the accuracy condition, and the object recognition procedure is performed on the partial image area, such that the object selected block (BX1*) is updated in the partial image area.

13. An object detection system (1000) for video, wherein the object detection system (1000) comprises:
a receiving unit (101), configured to receive a current image (IM1*) among a plurality of consecutive images (IM0 to IM6);
a block defining unit (106), coupled to the receiving unit (101), wherein the block defining unit (106) is configured to filter out an object selected block (BX1*) in the current image (IM1*), to obtain a background block (BG); and compare a plurality of similarities of a plurality of selected block moving vectors (MVs) corresponding to the object selected block (BX1*) to a plurality of background moving vectors (MVb) corresponding to the background block (BG), to obtain an object foreground block (FN) and an object background block (BN) in the object selected block (BX1*);
a comparison unit (109), coupled to the defining unit (106), wherein the comparison unit (109) is configured to compare an amount of a plurality of object foreground moving vectors (MVf) corresponding to the object foreground block (FN) and an amount of a plurality of object background moving vectors (MVb2) corresponding to the object background block (BN);
a trend analyzing unit (110), coupled to the comparison unit (109) and the block defining unit (106), wherein if the amount of the object foreground moving vectors (MVf) corresponding to the object foreground block (FN) is larger than the amount of the object background moving vectors (MVb2) corresponding to the object background block (BN), the trend analyzing unit (110) calculates a foreground moving trend (TDf) of the object foreground moving vectors (MVf) corresponding to the object foreground block (FN); and
an updating unit (111), coupled to the trend analyzing unit (110) and the comparison unit (109), wherein the updating unit (111) is configured to update the object selected block(BX1*) in the current image (IM1*) by using the foreground moving trend (TDf) of the object foreground moving vectors (MVf) corresponding to the object foreground block (FN), or a background moving trend (TDb) of the background moving vectors (MVb) corresponding to the background block (BG).

14. The object detection system (1000) for video according to claim 13, further comprising:
an object recognition unit (103), configured to perform an object recognition procedure;
an object-recognition determination unit (102), coupled to the receiving unit (101) and the object recognition unit, wherein the object-recognition determination unit (102) is configured to determine whether the object recognition unit (103) needs to perform the object recognition procedure on the current image (IM1*); and
an object selection unit (105), coupled to the object-recognition determination unit (102) and the block defining unit (106), wherein when the object recognition unit (103) does not need to perform the object recognition procedure on the current image (IM1*), the object selection unit (105) obtains the object selected block (BX1*) in the current image (IM1*) by using a previous image (IM0) of the consecutive images (IM0 to IM6).

15. The object detection system (1000) for video according to claim 14, wherein the object-recognition determination unit (102) determines whether the object recognition unit (103) needs to perform the object recognition procedure on the current image (IM1*) by using a predetermined elapsed time.

16. The object detection system (1000) for video according to claim 14, wherein the object-recognition determination unit (102) determines whether the object recognition unit (103) needs to perform the object recognition procedure on the current image (IM1*) by using a number of executed images.

17. The object detection system (1000) for video according to anyone of the claims 13 to 16, wherein the trend analyzing unit (110) calculates the background moving trend (TDb) of the background moving vectors (MVb) corresponding to the background block (BG) via a majority decision algorithm, a voting algorithm, a linear regression algorithm, or an interpolation algorithm.

18. The object detection system (1000) for video according to anyone of the claims 13 to 17, wherein if at least one of the selected block moving vectors (MVs) is not similar to the background moving trend (TDb) of the background moving vectors (MVb) corresponding to the background block (BG), the block defining unit (106) obtains the object foreground block (FN) by using the at least one of the selected block moving vectors (MVs) from the object selected block (BX1*).

19. The object detection system (1000) for video according to anyone of the claims 13 to 18, wherein if the amount of the object foreground moving vectors (MVf) corresponding to the object foreground block (FN) is larger than the amount of the object background moving vectors (MVb2) corresponding to the object background block (BN), the updating unit (111) updates the object selected block (BX1*) in the current image (IM1*) by using the foreground moving trend (TDf);
if the amount of the object foreground moving vectors (MVf) corresponding to the object foreground block (FN) is less than the amount of the object background moving vectors (MVb2) corresponding to the object background block (BN), the updating unit (111) updates the object selected block (BX1*) in the current image (IM1*) by using the background moving trend (TDb).

20. The object detection system (1000) for video according to anyone of the claims 13 to 19, wherein the trend analyzing unit (110) selects some of the object foreground moving vectors (MVf) by using a predetermined distance block condition or an object characteristic condition to calculate the foreground moving trend (TDf).

21. The object detection system (1000) for video according to anyone of the claims 13 to 20, wherein the trend analyzing unit (110) performs a majority algorithm, a voting algorithm, a linear regression algorithm, or an inner difference algorithm to obtain the foreground moving trend (TDf) of the object foreground moving vectors (MVf) corresponding to the object foreground block (FN).

22. The object detection system (1000) for video according to anyone of the claims 13 to 21, wherein the trend analyzing unit (110) compares the object foreground moving vectors (MVf) with a default outlier, and obtains the foreground moving trend (TDf) of the object foreground moving vectors (MVf) corresponding to the object foreground block (FN) by using the object foreground moving vectors (MVf) which are less than the default outlier.

23. The object detection system (1000) for video according to anyone of the claims 13 to 22, further comprising:
an accuracy judgment unit (113), coupled to the updating unit (111), wherein the accuracy judgment unit (113) is configured to determine whether the object selected block (BX1*) meets an accuracy condition; and
an object recognition unit (103), coupled to the accuracy judgment unit (113)s, wherein the object recognition unit (103) performs the object recognition procedure to update the object selected block in the current image (IM1*), if the object selected block (BX1*) does not meet the accuracy condition.

24. The object detection system (1000) for video according to claim 23, wherein the object recognition unit (103) selects a partial image area from the current image (IM1*) by using the accuracy condition, and performs the object recognition procedure on the partial image area, such that the object selected block (BX1*) is updated in the partial image area.
